# EUROPEAN PATENT SPECIFICATION

(11) **EP 3 606 350 B1**
(45) Date of publication and mention of the grant of the patent: **30.06.2021**
(21) Application number: 18721866.4
(22) Date of filing: 05.04.2018
(51) Int. Cl.: A22C 25/02, A22C 25/14, A23B 4/22

(54) **SYSTEM AND METHOD FOR WASHING AND COOLING FOOD ITEMS COMPRISING A COIL PUMP**
SYSTEM UND VERFAHREN ZUM WASCHEN UND KÜHLEN VON LEBENSMITTELN UMFASSEND EINE SPULENPUMPE
SYSTÈME ET PROCÉDÉ DE LAVAGE ET REFROIDISSEMENT DE PRODUITS ALIMENTAIRES COMPRENANT UNE POMPE À BOBINE

(30) Priority: 05.04.2017 IS 50174; 01.03.2018 IS 50213
(43) Date of publication of application: 12.02.2020
(73) Proprietor: Lambhusasund ehf., 300 Akranes (IS)
(72) Inventor: ARNASON, Ingolfur, 300 Akranes (IS)
(74) Representative: Arnason Faktor
(86) International application number: PCT/IS2018/050003
(87) International publication number: WO 2018/185791

(56) References cited:
- EP-A2- 0 237 262
- EP-A2- 0 550 836
- US-A- 3 489 074
- US-A- 3 586 510
- US-A- 3 804 959
- US-A1- 2008 271 610

## Description

### Field of the invention

The invention relates to a method and a device for rinsing, cooling and adding substances to food items. Such method and device may, for instance, be used to cool down and add anti-bacterial substances to food items during the cooling process.

### Background

A continuous development of food processing, such as processing of fish products is always on demand with the focus on for instance to increase utilization and value of products as well as meeting demands for quality after processing. Cooling, rinsing, bleeding of freshly slaughtered animals such as fish, poultry requires mechanic devices to facilitate fast, efficient but relatively gentle handling and transportation through these processes.

One of the parts of the processing fish is the bleeding step. In a processing line where speed is of essence, one of the problems is that after the fish is bleed and gutted the fish will bleed into the meat. This will have an effect on the colour of the meat and thereby the price which can be obtained for the final product. Another problem is waste management of biological material such as blood, which is costly and leaves environmental footprints.

One of the problems in the food industry is getting rid of bacteria such as Listeria in Salmon and Salmonella in chicken. For Listeria, the solution has been to freeze the salmon to get rid of this bacteria. This however poses a problem for delivery of fresh salmon for the market.

There are several different types of devices known in the art for cooling, rinsing, bleeding food items and adding substances to food. Means such as screw conveyors in tanks are known as well as cleated/separated transport conveyor belts passing through a tub have been used for the purpose of bleeding and rinsing and passing food items in and out of a solution with additives to treat food items with anti-bacterial agents or adding phosphate has been done in tubs with sea water, brine, water or fluid ice.

Spiral pumps have been used to transport items delicately through a closed environment in a low pressure system. Such pumps are ideal for pumping water-mixed material such as raw and cooked shrimp, shellfish and pelagic and other small fish according to the principle of Archimedes. By rotating slowly, the pump facilitates transport and/or elevation of water and material through pipes, without using any propeller. The food items are gently conveyed in a closed environment. The system also prevents the items from being exposed to the outside environment.

US 3,586,510 discloses an apparatus for conveying a material from a zone at atmospheric pressure to a zone at a different pressure and then back to the zone at atmospheric pressure. The apparatus is a helical would pump and rotating about an axis. The food items are fed in at an in-feed end in liquid in the form of separate slugs equal to the volume of a half turn of the tube, where the slugs alternate with equal volumes of air. The inlet and outlet are at atmospheric pressure, whereas the centre zone for treatment of the food items is at a positive or negative pressure. The coils of the centre zone have cross-connections to equalise the pressure, which is arranged by small air feedback tubes on the outside of coil being connected from the windings downstream of the centre zone to the upstream windings. Similar apparatuses are also known from the documents US 3 804 959, EP 0 237 262, EP 0 550 836, US 2008/271610 and US 3 489 074.

### Summary of the Invention

The present invention provides a method, a system and a device for treating and/or transporting food items. The device of the present invention is also applicable for portioning food items. The apparatus and method are designed to facilitate transport, rinsing, bleeding and cooling food items as well as treating the food items with additives such as salts or phosphates or anti-bacterial substances. The device of the present invention is designed as a spiral pump with a tubing that is helically wound around a frame structure which rotates around a horizontal axis. Spiral pumps have been used to continuously pump water from creeks or to continuously pump small food items such as shrimps as a means of transport or conveyance and for level up transportation. The method and device of the present invention uses a spiral pump to cool down and rinse food items or even to facilitate bleeding of newly slaughtered animals, such as fish or chicken. The new method is performed by introducing a calculated amount of liquid and food items into the first winding of the spiral pump and then rotating the tubing only one circle at the time to move the food items in the liquid into the second winding before introducing additives into the second winding through a second tubing, which is wound through the inlet of the first tubing and into the second winding. By introducing additives such as ozone the device of the present invention can be used for killing bacteria and for transporting items from one location to another, therefore delivering the food items from a possible "unclean" facility to a "clean" facility. To aid the elimination of bacteria such as Listeria, the solution used while transporting the food items through the pump can be a salt and temperature controlled solution providing conditions for sub-chilling or undercooling the fish during the transport step, where the items are transported in a solution at or near the phase transition of freezing the fish without freezing the fish. The principle of Archimedes ensures that if the total amount of liquid, food items and additives does not exceed 50% of the volume of a winding the food items in the winding do not mix with the food items in the next winding and the air filling about 50% or more of the volume of the winding pushes the content of a prior winding to the next one. The device and method of the present invention is suitable for rinsing sensitive food items such as fish liver without rupturing or damaging the sensitive food items. It is a further advantage of the device of the present invention that it allows the use of ozone for anti-bacterial treatment of food objects as it comprises a closed system for the ozone. The ozone is pumped into the second winding of the spiral pump, such that the air/gas phase can only be advanced forward in the pump but is now able to flow out of the in-feed opening of the pump. An air/gas separation device at the out-fee end of the pump separates the air/gas phase from the liquid and food objects, such that employees are not subjected to the ozone gas.

It is an object of the present invention to overcome and/or ameliorate the aforementioned drawbacks of the prior art and to provide an improved and/or alternative and/or additional method or device for facilitating rinsing, bleeding, cooling, transporting and/or portioning food items by using a spiral pump. It is one preferred object of the present invention to provide a method and device to facilitate treatment the of food items with additives such as salts or phosphates or anti-bacterial substances such as ozone using the spiral or helical pump of the present invention. Moreover, it is a preferred object of the present invention to provide a method and device, preferably designed to rinse, add substances to or cool down food items while being transported or conveyed from one location to another. Another preferred object of the present invention is to provide a device having a design where food items are collected in an in-feeding chamber before a batch of food items, liquid or fluid ice are introduced into a first winding of a spiral pump and rotating the pump in intervals about 360° with stops for adding another batch of food items in liquid and additives to the first winding and for adding additives or ozone into the second winding through a second tubing, which is wound through the inlet of the first tubing and into the second winding. An important aspect of the present invention is batch treatment and a portioning of food items by rotating the windings of the pump one round at the time thereby controlling the time of treatment and also controlling the amount if food items vs liquid and additives based on the nature of the food items.

The object(s) underlying the present invention is (are) particularly solved by the features defined in the independent claims. The dependent claims relate to preferred embodiments of the present invention. Further additional and/or alternative aspects are discussed below.

Thus, at least one of the preferred objects of the present invention is solved by a method for treating food items in liquid media according to claim 1. The method comprises the steps of:
a) providing a spiral pump, said spiral pump further comprising
   i) a helical wound tubing, an in-feed end and an out-feed end, where the helical wound tubing has three or more windings,
   ii) a horizontally rotating frame structure onto which the helical wound tubing is wound,
   iii) at least one second tubing is fed into the in-feed end of the helical wound tubing and is further fed through the first winding and into the second winding of the helical wound tubing,
b) feeding liquid through the in feed end into the first winding of the helical wound tubing,
c) feeding food items into the first winding of the helical wound tubing through the in-feed end,
d) rotating the frame structure a whole circle around a horizontal central axis,
e) feeding at least one additive into the second winding of the helical wound tubing through the in-feed end of the at least one second tubing,
f) repeating steps b) - e) while there are food items to be feed into the first winding of the helical wound tubing, and
g) when the last items have undergone steps b) - e), the frame structure is rotated until the last food items have exited the out-feed end of the tubing.

Another preferred object of the present invention is solved by an apparatus for treating food according to claim 9. The apparatus comprises a spiral pump, said spiral pump further comprising a helical wound tubing with an in-feed end and an out-feed end. The helical wound tubing has three or more windings arranged around a frame structure rotating around a horizontal central axis. The apparatus further comprises at least one second tubing is fed into the in-feed end of the helical wound tubing and is further fed through the first winding and into the second winding of the helical wound tubing.

In a further embodiment the system comprises a spiral pump with a helical wound tubing, an in-feed end and an out-feed end, where the helical wound tubing has three or more windings arranged on a horizontally rotating frame structure rotating around a horizontal central axis. The pump further comprises at least one second tubing fed into the in-feed end of the helical wound tubing and is further fed through the first winding and into the second winding of the helical wound tubing. The system further comprises performing the steps of:
i) feeding liquid through the in feed end into the first winding of the helical wound tubing,
ii) feeding food objects into the first winding of the helical wound tubing through the in-feed end,
iii) rotating the frame structure a whole circle around a horizontal central axis,
iv) feeding at least one additive into the second winding of the helical wound tubing through the in-feed end of the at least one second tubing 6,
v) repeating steps i) - iv) while there are food items to be feed into the first winding of the helical wound tubing, and
vi) when the last items have undergone steps i) - iv), the frame structure is rotated until the last food items have exited the out-feed end of the tubing.

Another further embodiment relates to a method for eliminating bacteria from slaughtered fish, the method comprising: The method comprises the steps of:
a) providing a spiral pump, said spiral pump further comprising
   i) a helical wound tubing, an in-feed end and an out-feed end, where the helical wound tubing has three or more windings,
   ii) a horizontally rotating frame structure onto which the helical wound tubing is wound,
   iii) at least one second tubing is fed into the in-feed end of the helical wound tubing and is further fed through the first winding and into the second winding of the helical wound tubing,
b) feeding a salt solution at a sub-zero temperature at or above the freezing point of the solution through the in feed end into the first winding of the helical wound tubing,
c) feeding one or more fish or a batch of fish into the first winding of the helical wound tubing through the in-feed end,
d) rotating the frame structure a whole circle around a horizontal central axis,
e) feeding at ozone into the second winding of the helical wound tubing through the in-feed end of the at least one second tubing,
f) repeating steps b) - e) while there are one or more fish or a batch of fish to be feed into the first winding of the helical wound tubing, and
g) when the last one or more fish or a batch of fish has undergone steps b) - e), the frame structure is rotated until the last one or more fish or a batch of fish have exited the out-feed end of the tubing.

Another embodiment relates to a method for treating food items in batches. The method comprises the steps of:
a) providing a spiral pump with a helical wound tubing, an in-feed end and an out-feed end, said helical wound tubing having three or more windings arranged on a rotating frame structure around a horizontal central axis,
b) feeding liquid and a batch of food items through the in feed end into the first winding of the helical wound tubing,
c) rotating the cylindrical frame structure a whole circle around a horizontal central axis,
d) feeding at least one additive into the second winding of the helical wound tubing through the in-feed end of the at least one second tubing,
e) repeating steps b), c) and d) there are batches of food items to be feed into the first winding of the helical wound tubing, and, and
f) when the last batch has undergone steps b) c) and d), the frame structure is rotated until the last batch of food items has exited the out-feed end of the tubing.

Furthermore, another embodiment relates to a method for treating food items in liquid media, where the spiral pump of the present invention is comprised in a housing for housing the components of the pump, and where the spiral pump is either i) placed in an opening in a wall between two rooms, said opening having the shape of the outer shape of the housing and a seal between the housing and the opening in the wall provides isolation between the two rooms, where the in-feed opening opens into a first room and the out-feed opening opens into a second room, or ii) the spiral pump is placed adjacent to the wall in room in one room, where the housing of the pump extends to cover a part of the out-feed end of the pump and a seal provides isolation between the two rooms as the out-feed end extends into the second room to deliver treated food items therein. The first room comprises food objects prior to a treatment with additives such as, but not limited to, anti-bacterial substances. In such an embodiment, the first room receives food items which may be contaminated with bacteria, whereas the second room is a bacterial free room for further processing and/or packing the food items.

Another embodiment relates to a method where food items are subjected to one or more steps of sub-chilling or under-cooling along with other treatment of the food items as they are transported through the pump by feeding a salt-controlled and temperature controlled solution into the tubing of the spiral pump.

An apparatus and a method are also provided to facilitate bleeding and rinsing of whole slaughtered fish before processing or cooling, where collection of at least portion of the blood is possible during rinsing the fish with water or other liquid. One of the challenges in modern food industry is to reduce the amount of water used in producing food as well as using as much of the animals slaughtered for production of food. This includes exploring use of parts of the animals not used before and managing waste material in an environmental manner. Blood from fish during slaughtering has traditionally been rinsed off the fish using water or sea water, which then has to be disposed of with costly methods. The present invention provides a device and method to reduce waste and waste management of biologic material as well as rinsing blood of freshly caught and slaughtered fish to increase the economic value of the fish.

Therefore another embodiment is related to a method to facilitate bleeding of fish, the method comprises the steps of:
a) providing a spiral pump with a helical wound tubing, an in-feed end and an out-feed end, said helical wound tubing having three or more windings arranged on a rotating frame structure around a horizontal central axis,
b) feeding liquid and freshly slaughtered and gutted fish through the in feed end into the first winding of the helical wound tubing,
c) rotating the cylindrical frame structure a whole circle around a horizontal central axis,
d) feeding compressed air into the second winding of the helical wound tubing through the in-feed end of the at least one second tubing,
e) repeating steps b), c) and d) while there are food items to be feed into the first winding of the helical wound tubing, and
f) when the last items have undergone steps b), c) and d), the frame structure is rotated until the last food items have exited the out-feed end of the tubing.

In an embodiment of the present invention the performance of method steps b) and c) can be in any order or simultaneously.

In an embodiment of the present invention the additive fed into the second winding is ozone.

In an embodiment of the present invention the additive fed into the second winding is compressed air to facilitate bleeding of fish.

In an embodiment of the present invention the second tubing is led into the first tubing through the first winding and opening into the bottom portion of the second winding. This will ensure that the additives are introduced into the liquid holding the food items.

In an embodiment of the present invention the amount of liquid, food objects and additives fed into the first winding amounts to less than 55% of the volume of the each winding and wherein the time of treatment of food items is determined by the number of windings of the spiral pump or the amount of time between the rotations in step d), i.e. rotating the frame structure a whole circle around a horizontal central axis.

In an embodiment of the present invention all the windings between the first and last winding have the same circumference and same inner volume.

In an embodiment of the present invention the amount of liquid, food objects and additives fed into the first winding amounts to less than 50% of the volume of the first winding, or preferably less than 45% of the volume of the first winding In an embodiment of the present invention the apparatus comprises a computing means for controlling the rotation of the pump and the interval (time) between each rotation. The computing means also calculates the amount of liquid, additives and food items fed into the first winding to maintain a desired volume and ration of food items vs. liquids. This varies between different food items.

In an embodiment of the present invention mixing of food items, liquid and additives is performed in an in-feeding chamber for collecting items prior to transferring the food items, liquid and additives into the first winding.

In an embodiment of the present invention the weight of the food items is determined prior to feeding the food items into the in-feeding chamber to regulate the amount of food items fed into each winding before step e).

In an embodiment of the present invention the ratio of food items vs liquid and additives is between 40:60 and 50:50 respectively.

In an embodiment of the present invention the method further comprising the step of feeding air through a third tubing into the second winding of the pump to create overpressure in the windings of the pump.

In an embodiment of the present invention the liquid comprises one or more of, but not limited to water, sea water, brine, a salt-controlled and temperature controlled solution from a cooling system, fluid ice or any combination thereof.

In an embodiment of the present invention the additives comprise one or more of, but not limited to anti-bacterial substances, salts, polyphosphates or any combination thereof.

In an embodiment of the present invention the method further comprises the step of feeding the air/gas which comes out of the tubing together with the liquid and the food items into a device which separates the air/gas from the liquid and the food items and optionally compresses the air/gas for further treatment.

In an embodiment of the present invention the in-feed and the out-feed end of the helical wound tubing are centrally extending out of the rotating frame structure, where a joint in the tubing is positioned approximately where the tubing exits the frame structure.

In an embodiment of the present invention the apparatus further comprises an in-feeding chamber for collecting items leading into the tubing.

In an embodiment of the present invention the apparatus further comprises a scale in a weighing chamber 8 prior to and leading to the in-feeding chamber. In another embodiment of the present invention, the scale is in the -feeding chamber.

In an embodiment of the present invention the apparatus further comprises an in feeding conveyor feeding objects into weighing chamber or the in-feeding chamber.

In an embodiment of the present invention the helical wound tubing has three to fifty windings, such as three to twenty-five windings or three to ten windings.

In an embodiment of the present invention the apparatus comprises a third tubing threaded through the in-feed end of the helical wound tubing and wound therein into the second winding to feed air into the helical wound tubing.

In an embodiment of the present invention ozone is fed into the mixture of liquid and food items in the lower portion of the second winding of the helical wound tubing.

In an embodiment of the present invention the apparatus further comprises a cooling system for blending a salt solution and bringing said salt solution to a predetermined temperature.

In an embodiment of the present invention the apparatus further comprises an air/gas separating device at the out-feed end of the pump for separating the air/gas phase from the content exiting the pump. Additional means may further be provided for separating gasses from the air/gas phase.

In an embodiment of the present invention where the method and the apparatus is used to facilitate bleeding of fish, the blood is collected as the items are retrieved from the outfeed end of the spiral pump to either further process the blood such as to collect components therefrom or for disposal of the blood directly in a more concentrated state.

In the present context the term "treating food items" relates to rinsing, washing, bleeding, cooling or adding substances to food items such as, but not limited to, salts, phosphates or anti-bacterial agents etc.

In the present context the terms "food items" or "food objects" are used equally for food items such as slaughtered fish or chicken, as well as for parts or animals such as aquatic animals, birds or other smaller slaughtered animals.

In the present context the term "under-cooling" or "sub-chilling" refers to the process or method of bringing fish to a desired temperature at or near the phase transition of freezing the fish without freezing the fish, and generally below the freezing point of water (0°C). Furthermore, these terms refer to a fish or fish product being brought to or kept at a desired temperature at or near the phase transition of freezing the fish without freezing the fish, such as a temperature below 0°C (sub-zero conditions), such as preferably at or below -0.2°C, or more preferably at or below -0.5°C, or at or below - 0.7°C, or at or below -0.8°C, such as at or below -1.0°C, such as at or below -1.5°C.

All embodiments listed herein relate to particular embodiments of the apparatus, system and the method of the present invention.

### Description of various embodiments

The present invention will become more fully understood from the detailed description given hereinafter and the accompanying drawings which are given by way of illustration only, and thus, are not limitative of the present invention, and wherein:
FIG. 1 is a front view of the apparatus of the present invention
FIG. 2 is perspective drawing of an apparatus according to one embodiment of the present invention.
FIG. 3 is a transactional view showing a system for treating food items with an anti-bacterial agent.
FIG. 4 is a transection of the second winding a helical wound tubing with an air tubing.
FIG. 5 shows an air/gas separating device for the spiral pump of the invention.

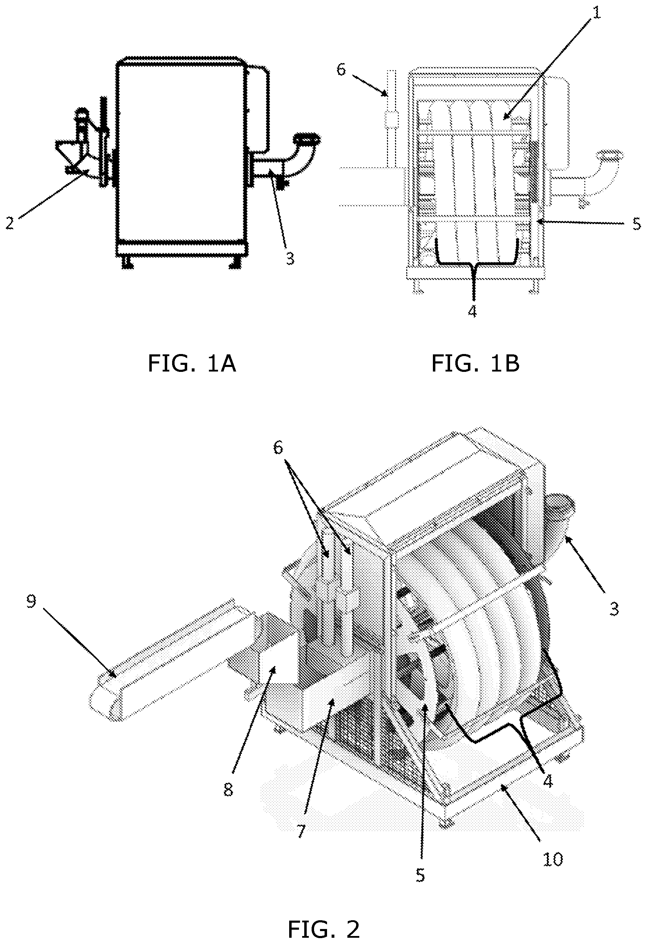

Figure 1 shows is the apparatus with (A) and without (B) a housing around the frame.

The apparatus of the present invention is used for treating food items in liquid media such as sea water or liquid ice with or without salt and other additives. The apparatus comprises a helical wound tubing 1 with an in-feed end 2 and an out-feed end 3. In the embodiment shown in Fig. 1B the helical wound tubing has four windings wound around and into a cylindrical frame structure 5 rotating around the horizontal central axis of the frame structure 5. At the in-feed end of the apparatus, there is a second tubing 6 shown feeding into the in-feed end of the helical wound tubing. The drawing also shows how the in-feed and the out-feed end of the helical wound tubing are centrally extending out of the cylindrical rotating frame structure.

Figure 2 shows an overview of the apparatus and an in-feeding mechanism. The in-feeding end of the tubing is provided with an in-feeding chamber 7 for collecting items. The in-feeding chamber 7 leads into the in-feed end of the tubing 1. Above the in-feeding chamber 7 a weighing chamber 8 is shown. The weighing chamber 8 comprises a scale for determining the weight of the food items prior to collecting them in the in-feeding chamber 7. Above the weighing chamber 8 an in feeding conveyor 9 is shown for feeding objects into the weighing chamber 8. Above the in-feed chamber 7 of the apparatus two inlet tubing 6 are shown feeding liquid, fluid ice and substances into the in-feed chamber 7 or the in-feed end of the helical wound tubing directly. The apparatus is shown standing on a support frame 10 supporting the rotating frame structure 5. The figure shows how the tubing is wound around and into a cylindrical frame structure 5 which rotates around a horizontal axis within the frame 5. The out-feed end 3 is shown as an upwardly extending tubing, but due to the nature of a spiral pump the material therein is pumped with a force which can easily deliver the content out of the pump to a level higher than the level of the pump. Although the in-feed end 2 and the out-feed end 3 of the helical wound tubing are centrally extending out of the cylindrical rotating frame structure a joint (not shown) in the centrally extending position of the tubing prevents any extension of the tubing from rotating. The apparatus is operated such that food items are fed in on the in feeding conveyor 9 into the weighing chamber 8, where the weight of each food item is weighted. Thereafter the food items are delivered into the in-feeding chamber 7. When a calculated amount of food items have been collected liquid or fluid ice or brine, the food items and additives such as anti-bacterial substances or phosphates are fed through the in feed end into the first winding of the helical wound tubing. The amount of food items, liquid and additives is calculated such that it does not exceed 50% of the volume of each winding and preferably where the content of food items is around 40-45%. Then the frame structure 5 is rotated a whole circle or approximately 360° around the horizontal axis. This brings the food items in the liquid or fluid ice and additives into the second winding. The steps of feeding liquid or fluid ice or brine, the food items and additives into the first winding and rotating the frame structure 5 is repeated as long as the pump is being operated or until the last content of the pump has been emptied out of the out-feed end of the pump. The time of treatment of food items is determined by the number of windings of the spiral pump and/or the amount of time between the rotations of the frame structure 5. Each of the tubing 6 for feeding liquid or fluid ice or brine and additives into the first winding of the tubing 1 either leads to the in-feeding chamber for mixing or into the first winding of the tubing 1.

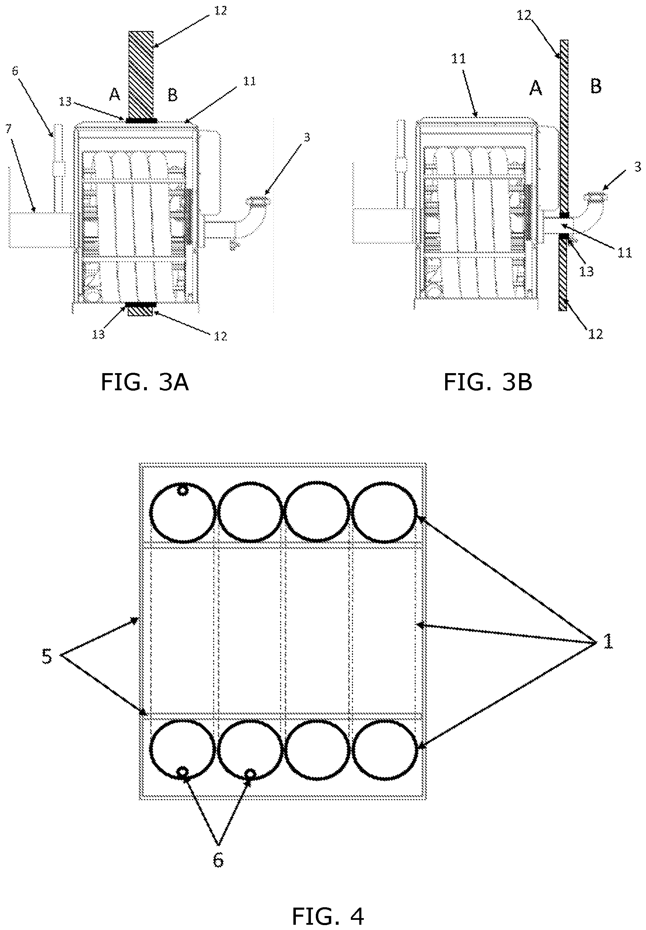

Figure 3 demonstrates a system for treating food items with an anti-bacterial and is positioned between two rooms. The apparatus has a housing 11 containing the components of the pump with openings in the sides for the in-feeding and out-feeding components. In Fig. 3A the apparatus is placed in an opening in a wall 12 between two rooms (A and B), where in room A the food items are not treated and where room B is a "clean" room for treated food items. This apparatus could be placed in a chicken factory, where the a chicken ready for packing is first directed through the apparatus of the present invention with a cooling agent for cooling and rinsing as well as a treatment for bacteria, such as Salmonella. The opening has the shape of the outer shape of the housing 10, but a seal 13 between the housing and the opening in the wall isolates the two rooms from one another. The in-feed opening opens into room A and the out-feed opening opens into the room B. In Fig. 3B the apparatus is placed adjacent to the wall 12 in room A. In this embodiment the housing 11 extends to cover a part of the out-feed end 3 of the pump and a seal 13 provides isolation between the two rooms. In an embodiment where chickens are being treated for bacteria before packing liquid and additives are fed through the in feed end into the first winding of the helical wound tubing and then food objects are fed into the first winding containing cooling/rinsing media as well as anti-bacterial substances. Thereafter the frame structure 5 is rotated a whole circle around a horizontal central axis, and this is repeated until all the chickens have been treated and passed through the pump into the "clean" room B for packing.

Figure 4 shows a schematic transection of the frame and the tubing across the middle/centre of the device. The figure shows the top and the bottom of each winding of the helical wound tubing 1 and the frame 5 supporting the helical wound tubing 1. The figure further shows the second tubing 6 wound within the first tubing through the first winding and opening into the bottom portion of the second winding. This will ensure that the additives are introduced into the liquid holding the food items. The curved section of each winding leading to the transection at the top and the bottom of each winding is shown as broken line.

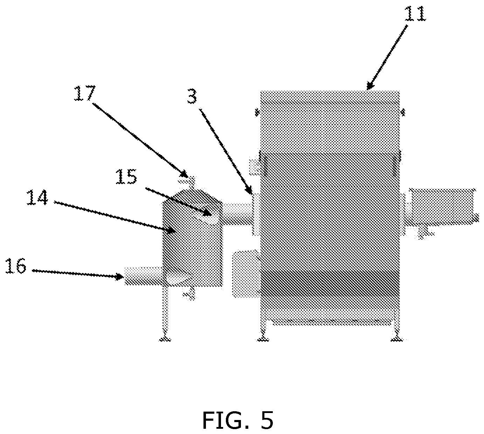

Figure 5 shows the spiral pump of the present invention where an air/gas separating device is positioned at the out-feed end 3 of the pump housing 11 for separating the air/gas phase from the content exiting the pump. The out-feed end 3 of the spiral pump delivers the content of the pump, including the liquid phase, the food items and the air/gas phase out of the pump and into the air/gas separating device. The air/gas separating device in this embodiment comprises container 14 having an inlet 15 at the top of a container and an outlet 16 for food items and liquid at the bottom of the container. The air/gas separating device further comprises an air/gas outlet 17 at the very top of the container 14.

As used herein, including in the claims, singular forms of terms are to be construed as also including the plural form and vice versa, unless the context indicates otherwise. Thus, it should be noted that as used herein, the singular forms "a," "an," and "the" include plural references unless the context clearly dictates otherwise.

Throughout the description and claims, the terms "comprise", "including", "having", and "contain" and their variations should be understood as meaning "including but not limited to", and are not intended to exclude other components.

The present invention also covers the exact terms, features, values and ranges etc. in case these terms, features, values and ranges etc. are used in conjunction with terms such as about, around, generally, substantially, essentially, at least etc. (i.e., "about 3" shall also cover exactly 3 or "substantially constant" shall also cover exactly constant). The term "at least one" should be understood as meaning "one or more", and therefore includes both embodiments that include one or multiple components. Furthermore, dependent claims that refer to independent claims that describe features with "at least one" have the same meaning, both when the feature is referred to as "the" and "the at least one".

It will be appreciated that variations to the foregoing embodiments of the invention can be made while still falling within the scope of the invention as defined by the appended claims.

Use of exemplary language, such as "for instance", "such as", "for example" and the like, is merely intended to better illustrate the invention and does not indicate a limitation on the scope of the invention unless so claimed. Any steps described in the specification may be performed in any order or simultaneously, unless the context clearly indicates otherwise.

All of the features and/or steps disclosed in the specification can be combined in any combination, except for combinations where at least some of the features and/or steps are mutually exclusive. In particular, preferred features of the invention are applicable to all aspects of the invention and may be used in any combination.

## Claims

1. A method for treating food items, the method comprising:
a) providing a spiral pump, said spiral pump further comprising
i) a helical wound tubing 1, an in-feed end 2 and an out-feed end 3, said helical wound tubing having three or more windings 4,
ii) a horizontally rotating frame structure 5 onto which the helical wound tubing 1 is wound,
iii) at least one second tubing 6 is fed into the in-feed end of the helical wound tubing and is further fed through the first winding and into the second winding of the helical wound tubing 1,
b) feeding liquid through the in feed end into the first winding of the helical wound tubing,
c) feeding one or more food items into the first winding of the helical wound tubing through the in-feed end,
d) rotating the frame structure a whole circle around a horizontal central axis,
e) feeding at least one additive into the second winding of the helical wound tubing through the in-feed end of the at least one second tubing 6,
f) repeating steps b) - e) while there are food items to be feed into the first winding of the helical wound tubing, and
g) when the last items have undergone steps b) - e), the frame structure is rotated until the last food items have exited the out-feed end of the tubing.

2. The method according to claim 1, wherein the additive fed into the second winding is ozone.

3. The method according to claim 1, wherein the ozone is fed into the mixture of liquid and food items in the lower portion of the second winding of the helical wound tubing.

4. The method according to claim 1, wherein the weight of the food items is determined prior to feeding the food items into the in-feeding chamber to regulate the amount of food items fed into each winding before step e).

5. The method according to claim 1, wherein the liquid comprises water, sea-water, brine, a salt-controlled and temperature controlled solution from a cooling system, fluid ice or any combination thereof.

6. The method according to claim 1, wherein the additives comprise anti-bacterial substances, salts, polyphosphates, ozone or any combination thereof.

7. The method according to claim 1, wherein steps b) and c) are performed simultaneously.

8. The method according to claim 1, further comprising the step of feeding air through a third tubing into the second winding of the pump to create overpressure in the windings of the pump.

9. An apparatus for treating food items in liquid media, the apparatus comprising a spiral pump, said spiral pump further comprising:
- a helical wound tubing 1 with an in-feed end 2 and an out-feed end 3, said helical wound tubing having three or more windings 4,
- a horizontally rotating frame structure 5,
wherein the helical wound tubing is wound around and/or into the frame structure **characterised in that**
at least one second tubing 6 is fed into the in-feed end of the helical wound tubing and is further fed through the first winding and into the second winding of the helical wound tubing 1.

10. The apparatus according to claim 9, further comprising an air/gas separating device at the out-feed end of the pump for separating the air/gas phase from the content exiting the pump.

11. The apparatus according to claim 9, further comprising an in-feeding chamber 7 for collecting items leading into the tubing.

12. The apparatus according to claim 11, further comprising a scale in a weighing chamber 8 prior to and leading to the in-feeding chamber 7.

13. The apparatus according to claim 9 for performing the steps of:
i) feeding liquid through the in feed end into the first winding of the helical wound tubing,
ii) feeding food items into the first winding of the helical wound tubing through the in-feed end,
iii) rotating the frame structure a whole circle around a horizontal central axis,
iv) feeding at least one additive into the second winding of the helical wound tubing through the in-feed end of the at least one second tubing 6,
v) repeating steps i) - iv) while there are food items to be feed into the first winding of the helical wound tubing, and
vi) when the last items have undergone steps i) - iv), the frame structure is rotated until the last food items have exited the out-feed end of the tubing.

14. The apparatus according to claim 9, wherein:
- the spiral pump has a housing 11 for housing the components of the pump,
- the spiral pump is placed in an opening in a wall 12 between two rooms, said opening having the shape of the outer shape of the housing,
- a seal 13 between the housing and the opening in the wall,
wherein the in-feed opening opens into one room and the out-feed opening opens into the second room.

15. The apparatus according to claim 14, wherein the housing covers a part of the out-feed end of the helical wound tubing 1 and in that the part of the housing covering the out-feed end of the helical wound tubing 1 penetrates the wall between the two rooms.

## Patentansprüche

1. Verfahren zur Behandlung von Lebensmitteln, wobei das Verfahren Folgendes umfasst:
a) Bereitstellen einer Spiralpumpe, wobei die Spiralpumpe ferner Folgendes umfasst
i) ein spiralförmig gewundenes Rohr 1, ein Zufuhrende 2 und ein Auslassende 3, wobei das spiralförmig gewundene Rohr drei oder mehr Wicklungen 4 aufweist,
ii) eine horizontal rotierende Rahmenstruktur 5, auf die das spiralförmig gewundene Rohr 1 gewickelt ist,
iii) wobei zumindest ein zweites Rohr 6 in das Zufuhrende des spiralförmig gewundenen Rohres eingeführt wird und weiter durch die erste Wicklung und in die zweite Wicklung des spiralförmig gewundenen Rohres 1 geführt wird,
b) Zuführen von Flüssigkeit durch das Zufuhrende in die erste Wicklung des spiralförmig gewundenen Rohres,
c) Zuführen von einem oder mehreren Lebensmitteln in die erste Wicklung des spiralförmig gewundenen Rohres durch das Zufuhrende,
d) Rotieren der Rahmenstruktur eine ganze Umdrehung um eine horizontale mittlere Achse,
e) Zuführen von zumindest einem Additiv in die zweite Wicklung des spiralförmig gewundenen Rohres durch das Zufuhrende des zumindest einen zweiten Rohres 6,
f) Wiederholen der Schritte b) - e), während in die erste Wicklung des spiralförmig gewundenen Rohres zuzuführende Lebensmittel vorhanden sind, und
g) wenn die letzten Objekte die Schritte b) - e) durchlaufen haben, wird die Rahmenstruktur rotiert, bis die letzten Lebensmittel das Auslassende des Rohres verlassen haben.

2. Verfahren nach Anspruch 1, wobei das in die zweite Wicklung zugeführte Additiv Ozon ist.

3. Verfahren nach Anspruch 1, wobei das Ozon in die Mischung aus Flüssigkeit und Lebensmitteln im unteren Teil der zweiten Wicklung des spiralförmig gewundenen Rohres zugeführt wird.

4. Verfahren nach Anspruch 1, wobei das Gewicht der Lebensmittel bestimmt wird, bevor die Lebensmittel in die Zufuhrkammer zugeführt werden, um vor Schritt e) die Menge von Lebensmitteln, die in jede Wicklung zugeführt werden, zu regulieren.

5. Verfahren nach Anspruch 1, wobei die Flüssigkeit Wasser, Meerwasser, Salzlake, eine salzgesteuerte und temperaturgesteuerte Lösung aus einem Kühlsystem, Fluideis oder eine beliebige Kombination daraus umfasst.

6. Verfahren nach Anspruch 1, wobei die Additive antibakterielle Substanzen, Salze, Polyphosphate, Ozon oder eine beliebige Kombination daraus umfassen.

7. Verfahren nach Anspruch 1, wobei die Schritte b) und c) gleichzeitig durchgeführt werden.

8. Verfahren nach Anspruch 1, ferner umfassend den Schritt des Zuführens von Luft durch ein drittes Rohr in die zweite Wicklung der Pumpe zum Erzeugen von Überdruck in den Wicklungen der Pumpe.

9. Einrichtung zur Behandlung von Lebensmitteln in flüssigen Medien, wobei die Einrichtung eine Spiralpumpe umfasst, wobei die Spiralpumpe ferner Folgendes umfasst:
- ein spiralförmig gewundenes Rohr 1 mit einem Zufuhrende 2 und einem Auslassende 3, wobei das spiralförmig gewundene Rohr drei oder mehr Wicklungen 4 aufweist,
- eine horizontal rotierende Rahmenstruktur 5,
wobei das spiralförmig gewundene Rohr um und/oder in die Rahmenstruktur gewunden ist
**dadurch gekennzeichnet, dass**
zumindest ein zweites Rohr 6 in das Zufuhrende des spiralförmig gewundenen Rohres eingeführt wird und weiter durch die erste Wicklung und in die zweite Wicklung des spiralförmig gewundenen Rohres 1 geführt wird.

10. Einrichtung nach Anspruch 9, ferner umfassend eine Luft/Gas-Trennvorrichtung am Auslassende der Pumpe zum Trennen der Luft/Gas-Phase vom Inhalt, der die Pumpe verlässt.

11. Einrichtung nach Anspruch 9, ferner umfassend eine Zufuhrkammer 7 zur Sammlung von Objekten, die in das Rohr führt.

12. Einrichtung nach Anspruch 11, ferner umfassend eine Waage in einer Wägekammer 8 vor der Zufuhrkammer 7 und in diese führend.

13. Einrichtung nach Anspruch 9 zur Durchführung der folgenden Schritte:
i) Zuführen von Flüssigkeit durch das Zufuhrende in die erste Wicklung des spiralförmig gewundenen Rohres,
ii) Zuführen von Lebensmitteln in die erste Wicklung des spiralförmig gewundenen Rohres durch das Zufuhrende,
iii) Rotieren der Rahmenstruktur eine ganze Umdrehung um eine horizontale mittlere Achse,
iv) Zuführen von zumindest einem Additiv in die zweite Wicklung des spiralförmig gewundenen Rohres durch das Zufuhrende des zumindest einen zweiten Rohres 6,
v) Wiederholen der Schritte i) - iv), während in die erste Wicklung des spiralförmig gewundenen Rohres zuzuführende Lebensmittel vorhanden sind, und
vi) wenn die letzten Objekte die Schritte i) - iv) durchlaufen haben, wird die Rahmenstruktur rotiert, bis die letzten Lebensmittel das Auslassende des Rohres verlassen haben.

14. Einrichtung nach Anspruch 9, wobei:
- die Spiralpumpe ein Gehäuse 11 zum Beherbergen der Komponenten der Pumpe aufweist,
- die Spiralpumpe in einer Öffnung in einer Wand 12 zwischen zwei Räumen platziert ist, wobei die Öffnung die Form der äußeren Form des Gehäuses aufweist,
- eine Dichtung 13 zwischen dem Gehäuse und der Öffnung in der Wand,
wobei sich die Zufuhröffnung in einen Raum öffnet und sich die Auslassöffnung in den zweiten Raum öffnet.

15. Einrichtung nach Anspruch 14, wobei das Gehäuse einen Teil des Auslassendes des spiralförmig gewundenen Rohres 1 abdeckt und wobei der Teil des Gehäuses, der das Auslassende des spiralförmig gewundenen Rohres 1 abdeckt, die Wand zwischen den zwei Räumen durchdringt.

## Revendications

1. Procédé de traitement d'articles alimentaires, le procédé comprenant :
a) la fourniture d'une pompe à spirale, ladite pompe à spirale comprenant en outre :
i) un tube enroulé en hélice 1, une extrémité d'alimentation 2 et une extrémité de sortie 3, ledit tube enroulé en hélice ayant trois enroulements 4 ou plus,
ii) une structure de cadre 5 tournant horizontalement sur laquelle le tube enroulé en hélice 1 est enroulé,
iii) au moins un deuxième tube 6 est introduit dans l'extrémité d'alimentation du tube enroulé en hélice et est ensuite introduit à travers le premier enroulement et dans le deuxième enroulement du tube enroulé en hélice 1,
b) l'alimentation en liquide à travers l'extrémité d'alimentation dans le premier enroulement du tube enroulé en hélice,
c) l'alimentation d'un ou plusieurs articles alimentaires dans le premier enroulement du tube enroulé en hélice à travers l'extrémité d'alimentation,
d) le fait de faire tourner la structure de cadre sur un cercle complet autour d'un axe central horizontal,
e) l'alimentation en au moins un additif dans le deuxième enroulement du tube enroulé en hélice à travers l'extrémité d'alimentation de l'au moins un deuxième tube 6,
f) la répétition des étapes b) à e) tant qu'il y a des articles alimentaires à introduire dans le premier enroulement du tube enroulé en hélice, et
g) lorsque les derniers articles ont subi les étapes b) à e),la structure de cadre est mise en rotation jusqu'à ce que les derniers articles alimentaires soient sortis de l'extrémité de sortie du tube.

2. Procédé selon la revendication 1, l'additif introduit dans le deuxième enroulement étant de l'ozone.

3. Procédé selon la revendication 1, l'ozone étant introduit dans le mélange de liquide et d'articles alimentaires dans la partie inférieure du deuxième enroulement du tube enroulé en hélice.

4. Procédé selon la revendication 1, le poids des articles alimentaires étant déterminé avant d'introduire les articles alimentaires dans la chambre d'alimentation pour réguler la quantité d'articles alimentaires introduits dans chaque enroulement avant l'étape e).

5. Procédé selon la revendication 1, le liquide comprenant de l'eau, de l'eau de mer, de la saumure, une solution à température contrôlée et salée provenant d'un système de refroidissement, de la glace fluide ou toute combinaison de ceux-ci.

6. Procédé selon la revendication 1, les additifs comprenant des substances antibactériennes, des sels, des polyphosphates, de l'ozone ou toute combinaison de ceux-ci.

7. Procédé selon la revendication 1, les étapes b) et c) étant réalisées simultanément.

8. Procédé selon la revendication 1, comprenant en outre l'étape d'alimentation en air à travers un troisième tube dans le deuxième enroulement de la pompe pour créer une surpression dans les enroulements de la pompe.

9. Appareil pour le traitement d'articles alimentaires dans des milieux liquides, l'appareil comprenant une pompe à spirale, ladite pompe à spirale comprenant en outre :
- un tube enroulé en hélice 1 avec une extrémité d'alimentation 2 et une extrémité de sortie 3, ledit tube enroulé en hélice ayant trois enroulements 4 ou plus,
- une structure de cadre tournant horizontalement 5,
le tube enroulé en hélice étant enroulé autour et/ou dans la structure de cadre,
**caractérisé en ce qu'**au moins un deuxième tube 6 est introduit dans l'extrémité d'alimentation du tube enroulé en hélice et est en outre introduit à travers le premier enroulement et dans le deuxième enroulement du tube enroulé en hélice 1.

10. Appareil selon la revendication 9, comprenant en outre un dispositif de séparation air/gaz à l'extrémité de sortie de la pompe pour séparer la phase air/gaz du contenu sortant de la pompe.

11. Appareil selon la revendication 9, comprenant en outre une chambre d'alimentation 7 pour recueillir les articles menant dans le tube.

12. Appareil selon la revendication 11, comprenant en outre une balance dans une chambre de pesage 8 avant et menant à la chambre d'alimentation 7.

13. Appareil selon la revendication 9, pour réaliser les étapes de :
i) l'alimentation en liquide à travers l'extrémité d'alimentation dans le premier enroulement du tube enroulé en hélice,
ii) l'alimentation en articles alimentaires dans le premier enroulement du tube enroulé en hélice à travers l'extrémité d'alimentation,
iii) le fait de faire tourner la structure de cadre sur un cercle complet autour d'un axe central horizontal,
iv) l'alimentation en au moins un additif dans le deuxième enroulement du tube enroulé en hélice à travers l'extrémité d'alimentation de l'au moins un deuxième tube 6,
v) la répétition des étapes i) à iv) tant qu'il y a des articles alimentaires à introduire dans le premier enroulement du tube enroulé en hélice, et
vi) lorsque les derniers articles ont subi les étapes i) à iv), la structure de cadre est mise en rotation jusqu'à ce que les derniers articles alimentaires soient sortis de l'extrémité de sortie du tube.

14. Appareil selon la revendication 9,
- la pompe à spirale comportant un boîtier 11 pour loger les composants de la pompe,
- la pompe à spirale étant placée dans une ouverture dans un mur 12 entre deux pièces, ladite ouverture ayant la forme de la forme extérieure du boîtier,
- un joint 13 entre le boîtier et l'ouverture dans le mur, l'ouverture d'entrée s'ouvrant dans une pièce et l'ouverture de sortie s'ouvrant dans la seconde pièce.

15. Appareil selon la revendication 14, le boîtier recouvrant une partie de l'extrémité de sortie du tube enroulé en hélice 1, et la partie du boîtier recouvrant l'extrémité de sortie du tube enroulé en hélice 1 pénétrant le mur entre les deux pièces.
